Europäisches Patentamt

European Patent Office

Office européen des brevets

(11) Numéro de publication: **0 123 347**
**B1**

(12) **FASCICULE DE BREVET EUROPEEN**

(45) Date de publication du fascicule du brevet: **02.09.87**

(21) Numéro de dépôt: **84200513.4**

(22) Date de dépôt: **10.04.84**

(51) Int. Cl.⁴: **H 02 K 29/12,** H 02 K 15/12

(54) **Moteur à courant continu sans collecteur à commutation électronique.**

(30) Priorité: **15.04.83 IT 939683**

(43) Date de publication de la demande:
**31.10.84 Bulletin 84/44**

(45) Mention de la délivrance du brevet:
**02.09.87 Bulletin 87/36**

(84) Etats contractants désignés:
**CH DE FR GB IT LI**

(56) Documents cités:
**EP-A-0 030 901**
**CA-A-1 080 776**
**DE-A-1 463 822**
**DE-A-1 538 749**
**DE-A-2 351 284**
**DE-B-1 227 992**
**FR-A-2 141 077**
**FR-A-2 303 959**
**FR-A-2 390 037**
**FR-A-2 423 903**
**FR-A-2 453 527**
**GB-A-2 080 046**
**US-A-3 257 594**
**US-A-3 667 011**

(73) Titulaire: **Mavilor Systèmes S.A.**
**Grenette**
**CH-1700 Fribourg (CH)**

(72) Inventeur: **Tassinario, Giampiero**
**Via Arrighetto da Settimello, 129**
**Calenzano (Firenze) (IT)**

(74) Mandataire: **Jörchel, Dietrich R.A. et al**
**c/o BUGNION S.A. Case postale 375**
**CH-1211 Genève 12 - Champel (CH)**

(56) References cited:
**INSTRUMENTS AND EXPERIMENTAL
TECHNIQUES, vol. 15, no. 3 II, mai/juin 1972,
pages 951-952, Consultants Bureau, New York,
US I.D. KOLODEEV: "Superconducting electric
motors having a disk rotor"**

Courier Press, Leamington Spa, England.

## Description

La présente invention a pour objet un moteur à courant continu selon la préambule de la revendication 1.

Un tel moteur est décrit dans le GB—A— 2 080 046. Il s'agit d'un moteur, d'un ventilateur léger et à faible inertie, utilisé notamment pour le refroidissement du radiateur d'une automobile et on a surtout cherché à diminuer son encombrement axial, sans s'occuper particulièrement de ses performances (rendement, points de commutation). D'autres moteurs à courant continu fonctionnant sans balais et dans collecteur et dans lesquels l'excitation du bobinage fixe est commandé par un organe solidaire en rotation de l'arbre du moteur, sont déjà connus, par exemple du brevet CH 632 878. Un moteur à courant continu comprenant un bobinage d'induit polyphasé et un dispositif de commutation électronique commandé par des générateurs de Hall est décrit par exemple dans le brevet CH 577 246. Ce document ne décrit toutefois pas la construction mécanique du stator et du rotor.

Les moteurs à courant continu à commutation électronique connus ont en commun que le bobinage d'induit présente des enroulements selon le principe du champ tournant, enroulements qui sont excités successivement en fonction de la position du rotor pour la production de ce champ tournant. Il ne s'agit donc pas de moteur à courant continu dans le sens conventionnel avec un comportement connu propre au courant continu, mais l'expression "moteur à courant continu" est utilisée en raison du fait que ce moteurs sont alimentés par une tension continue transformée par un dispositif électronique en tension alternative nécessaire pour produire le champ tournant.

L'invention a pour but de réaliser un moteur à courant continu à commutation électronique présentant le comportement typique d'un véritable moteur à courant continu et susceptible de remplacer sans autre les moteurs à courant continu de construction conventionnelle à collecteur et balais, et de réaliser simultanément un moteur à courant continu comportant un stator de construction particulièrement simple non seulement susceptible d'être fabrique de façon simple et présentant un faible encombrement, mais procurant au moteur des performances élevées avec un très bon rendement et dans lequel la quantité de cuivre du bobinage du stator, respectivement le diamètre des fils du stator ne soit pas limité par la géométrie de l'induit.

A cet effet, le moteur selon l'invention est caractérisé par la clause caractérisante de la revendication 1.

Dans le FR—A—2 423 903, on décrit un moteur à courant continu dont le rotor est formé d'un fer sans rainure muni d'un bobinage imbriqué ou ondulé, mais il s'agit d'un moteur à balais.

Selon la présente l'invention dans le cas d'un bobinage imbriqué, le nombre des bobines est de préférence un multiple du nombre des paires de pôles présentes sur l'un des côtés du rotor et toutes les bobines devant être excitées simultanément en parallèle sont branchées en parallèle dans l'induit par un câblage approprié. A chaque segment de l'anneau de connexions est relié de préférence le début d'une bobine et la fin d'une autre bobine de manière à relier toutes les bobines en série, les groupes de segments de l'anneau de connexions auxquels sont connectées les fins des bobines devant être excitées en parallèle, étant reliées entre eux par des fils conducteurs s'étendant de préférence en arc de cercle le long de l'anneau de connexions, notamment insérés dans une rainure de celui-ci, noyés dans ladite matière synthétique, un segment de chacun des groupes de segments de l'anneau de connexions étant pourvu de ladite prise, ces segments étant de préférence plus longs que les autres segments.

De cette manière on réalise un moteur à courant continu à commutation électronique compact et plat et dont le bobinage peut comporter un nombre considérable de points de commutation qui correspondent dans le cas d'un moteur conventional à un grand nombre de lamelles du collecteur. Le moteur est susceptible d'être utilisé particulièrement et de nombreuses manières comme moteur de positionnement.

Des formes d'exécution judicieuses de l'invention sont définies dans les revendications dépendantes.

Le dessin annexé représente, à titre d'exemple, des formes d'exécution de l'invention.

La figure 1 est une coupe axiale à travers un moteur selon une première forme d'exécution.

La figure 2 est une vue de dessus du rotor, du même moteur.

La figure 3 est une vue en coupe axiale de l'un des induits du moteur selon la figure 1, à plus grande échelle.

La figure 4 est une vue partielle schématique du bobinage d'induit.

La figure 5 est une vue schématique de l'une des bobines du bobinage d'induit.

La figure 6 est une vue, dans le sens de la flèche F6 de la figure 3, de dessus de l'anneau de connexions de l'induit avec ses segments, auquel est connecté le bobinage du stator, dont quelques enroulements sont montrés schématiquement à l'exclusion des autres éléments de l'induit.

La figure 7 est une vue de dessus schématique de l'anneau de connexions selon la figure 6 dans laquelle on a indiqué schématiquement les fils conducteurs entre les segments de l'anneau de connexions.

La figure 8 est une vue en perspective d'une ébauche d'anneau de connexions partiellement usinée.

La figure 9 est une vue partielle d'un anneau de connexions dans une phase ultérieure d'usinage.

La figure 10 est une vue de côté de l'anneau de connexions selon la figure 9, partiellement en coupe, avec, partiellement illustrés, les fils conducteurs avant la fixation entre les segments voulus.

La figure 11 représente l'anneau de connexions selon la figure 10, après la fixation des fils conducteurs, le moulage dans la matière plastique et l'usinage final avec les extrémités des bobines connectées au segment c1.

La figure 12 est une représentation schématique de l'arrangement des enroulements du bobinage de stator.

La figure 13 est une représentation de principe du circuit de commutation électronique avec les conducteurs provenant de l'anneau de connexions.

La figure 14 est une tabelle représentant le cycle d'une suite des commutations pour l'excitation d'un bobinage d'induit.

La figure 15 représente une deuxième forme d'exécution d'un moteur, en coupe axiale.

La figure 16 représente schématiquement une troisième forme d'exécution.

La figure 17 représente schématiquement une quatrième forme d'exécution.

La figure 18 représente une variante d'exécution du bobinage d'induit.

Les figures 19 et 20 montrent les schémas pour un bobinage ondulé avec son anneau de connexions.

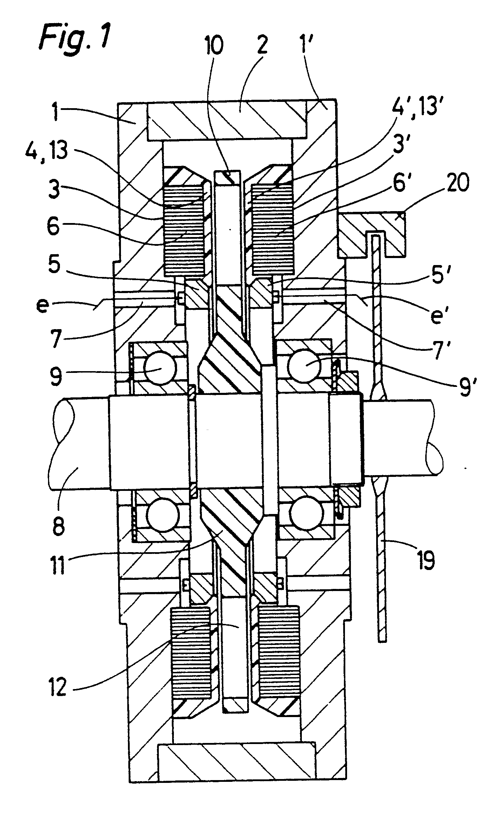

Le moteur représenté à la figure 1 présente deux moitiés de stator disposées symétriquement de chaque côté du rotor 10 en forme de disque, ces demi-stators étant constitués chacun d'un flasque 1, respectivement 1' en aluminium et de l'induit 3, respectivement 3', fixé à la face intérieure du flasque correspondant 1, respectivement 1'. Les deux flasques 1 et 1' sont reliés par un anneau 2 de manière à former un boîtier.

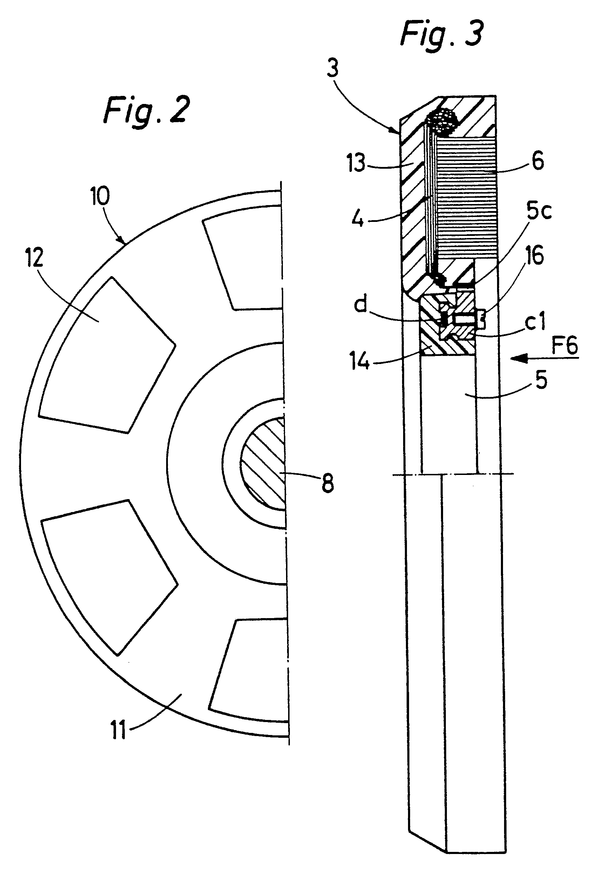

Selon les figures 1 et 3 l'induit 3 est constitué d'un bobinage d'induit 4 en forme de panier plat et d'un fer d'induit annulaire 6, tous les deux noyés dans une matière plastique 13, ainsi que incorporé coaxialement dans l'espace intérieur de ces deux éléments, d'un anneau de connexions 5 noyé partiellement dans une matière plastique 14 dont la zone périphérique est elle-même noyée dans la matière 13. L'induit 3 ainsi formé constitue une pièce compacte, dont la fabrication sera décrite plus en détail. Le fer d'induit 6 est formé par l'enroulement d'une tôle magnétique en forme de ruban, formant un paquet de tôles de forme annulaire et le bobinage d'induit 4 est disposé sur son côté en regard du rotor 10. L'autre induit 3' a la même construction composée des éléments 4', 5' et 6' ainsi que des matières plastiques 13' et 14'.

L'anneau de connexions 5, respectivement 5' qui sera également décrit plus loin plus en détail, est divisé en une pluralité de segments isolés les uns des autres et aux extrémités desquels sont connectées les bobines constituant le bobinage d'induit 4, respectivement 4'. Des conducteurs électriques e, e' (fig. 1) connectant les segments de l'anneau de connexions 5 respectivement 5' vers l'extérieur aux circuits de commutation électronique sont fixés par des vis 16 aux segments concernés comme montré à la figure 3 pour le segment c1, et passent à travers des canaux 7, respectivement 7' s'étendant parallèlement à l'axe du moteur dans le flasque 1, respectivement 1'. Lesdits circuits sont commandés par un codeur rotatif connu en soi comprenant un disque codeur 19 fixé sur l'arbre moteur 8 et un système photo-électrique 20 avec des émetteurs lumineux comme des photodiodes et des récepteurs, le disque codeur ayant des encoches, passe dans l'espace entre les émetteurs et les récepteurs.

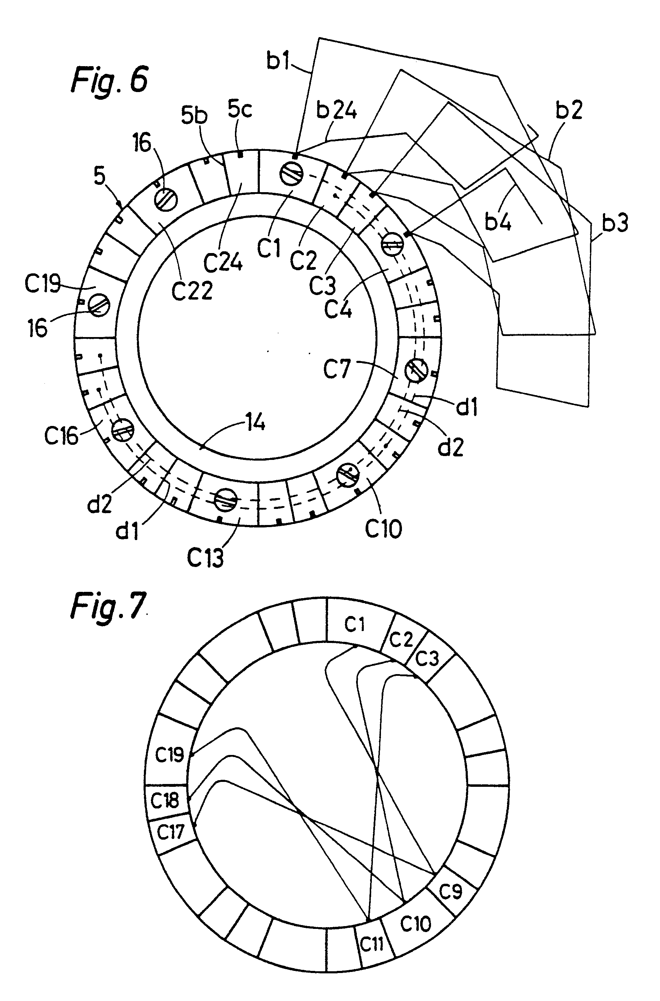

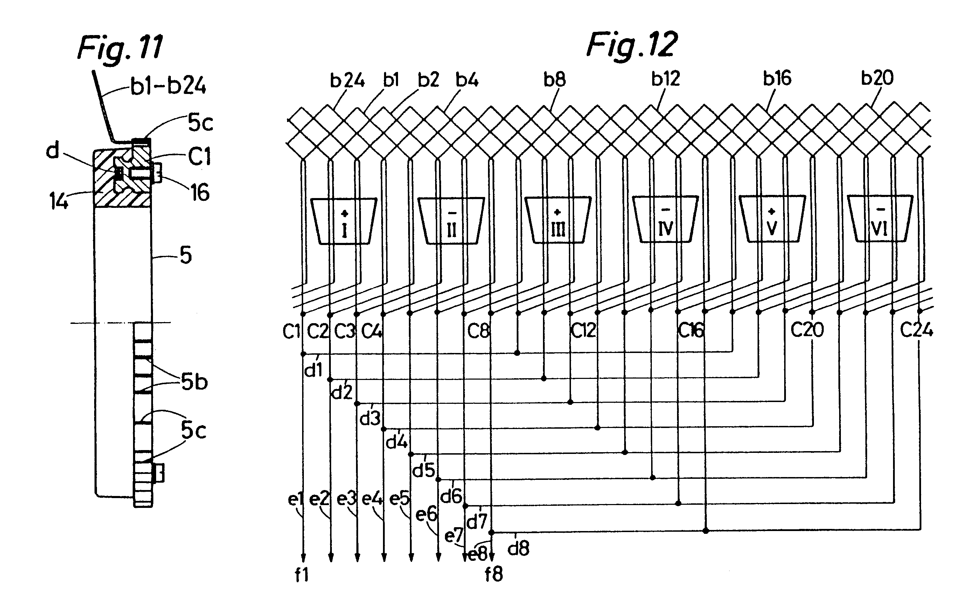

La construction et le branchement des bobines constituant le bobinage d'induit 4, respectivement 4' seront décrits plus loin en détail en relation avec les figures 6 et 12.

Le rotor 10 en forme de disque plat est, par exemple, pressé sur l'arbre 8 du moteur. Il est constitué d'un corps 11 en résine synthétique qui présente intérieurement une surépaisseur formant un moyen. Dans le corps 11, dans l'exemple considéré, sont noyés six aimants permanents 12 présentant la forme de segment d'anneau, qui sont par exemple incorporés dans un support en fibre de carbone présentant des logements prévus, le tout étant noyé dans la résine synthétique qui rend le rotor solidaire du moyeu fixé sur l'arbre 8 du moteur. Ces aimants permanents 12 de préférence constitués de Samarium-Cobalt, ont leur axe magnétique parallèle à l'arbre 8 du moteur et engendrent par conséquent des champs magnétiques parallèles à l'arbre. L'épaisseur des aimants permanents 12, dont les faces polaires sont libres de chaque côté, est légèrement plus grande que l'épaisseur de la zone du corps en matière synthétique 11 qui les entoure. Les aimants permanents 12 sont répartis régulièrement sur la périphérie du rotor 10 et disposés de telle sorte que sur chacune des faces du rotor les faces polaires se succédant selon la circonférence, présentent une polarité alternante, ainsi sur chacune des faces du rotor on trouve trois paires de pôles régulièrement répartis.

Dans le cas général on peut avoir p paires de pôles. Les aimants permanents 12 se déplacent dans l'entrefer entre les côtés des tôles 6 et 6' des deux moitiés de stators en regard du rotor, la largeur de cet entrefer étant déterminée par l'épaisseur des bobinages d'induit plats 4 respectivement 4', noyés dans la résine synthétique 13 et 13' et par le jeu nécessaire entre le stator et le rotor. Les flux magnétiques des aimants permanents qui se succèdent selon la circonférence, se ferment à travers les tôles 6 et 6', de telle sorte que les flasques 1 et 1' n'ont aucune fonction magnétique et peuvent être dès lors avantageusement réalisés en aluminium, favorables en ce que concerne le poids. Les tôles 6 et 6' sont formées à partir d'un ruban de fer enroulé, ce ruban étant muni d'une couche isolante de manière à supprimer les courants de Foucault. Ce fer présente une perméabilité magnétique élevée. Les tôles 6 et 6' peuvent naturellement être exécutées d'une autre manière connue, par exemple par pression d'une poudre de fer mélangée à un liant, les particules de fer étant orientées de manière que la conductibilité électrique dans la direction radiale soit extrêmement faible ou pratiquement inexistante pour empêcher l'apparition de courants de Foucault.

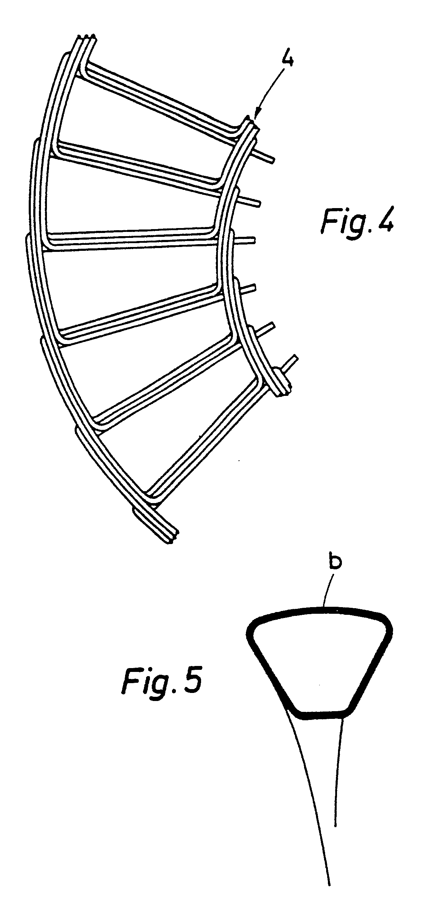

Chacun des bobinages d'induit 4 et 4' est réalisé sous la forme d'un enroulement imbriqué tel qu'il est utilisé dans des moteurs à courant continu conventionnels; il est constitué de bobines ou de bobinages partiels qui se recouvrent mutuellement partiellement de manière connue pour former un bobinage d'induit en forme de rosette (fig. 4). Il y a n=2 pm bobines, p étant le nombre de paires de pôles sur un côté du rotor et m le nombre de bobines connectées en série par le circuit de commutation électronique à un instant déterminé, respectivement dans une position déterminée du rotor, bobines coopérant temporairement avec les pôles voisins d'une paire de pôles du rotor passant devant elles. Dans l'exemple considéré p=3 et m=4 de telle sorte que chaque bobinage d'induit est constitué de 24 bobines désignées par b1 et b24 aux figures 6 et 12. Dans ces figures les bobines sont représentées schématiquement par une seule spire comme il est d'usage; dans la pratique chaque bobine présente bien entendu plusieurs spires, l'une de ces bobines b étant représentée à la figure 5. Les deux faces de chaque bobine qui croisent radialement le champ magnétique permanent sont à une distance l'une de l'autre égale à une division polaire, c'est-à-dire égale à la distance des milieux de deux pôles d'aimants permanents voisins selon la circonférence correspondant à un décalage de 60° dans l'exemple considéré, comme représenté à la figure 12, dans laquelle les six pôles des aimants permanents 12 sur l'un des côtés du rotor sont schématiquement indiqués. Lorsqu'une bobine est ainsi parcourue par un courant, les directions du courant dans les zones des deux pôles voisins sont opposées.

L'exemple considéré, dans lequel le rotor comprend six aimants permanents et le bobinage d'induit comprend seulement 24 bobines (m=4), a été choisi afin de ne pas compliquer la représentation du bobinage et à le rendre plus lisible. Dans la pratique on choisira naturellement un nombre de bobines plus élevé, par exemple m=8, c'est-à-dire 48 bobines.

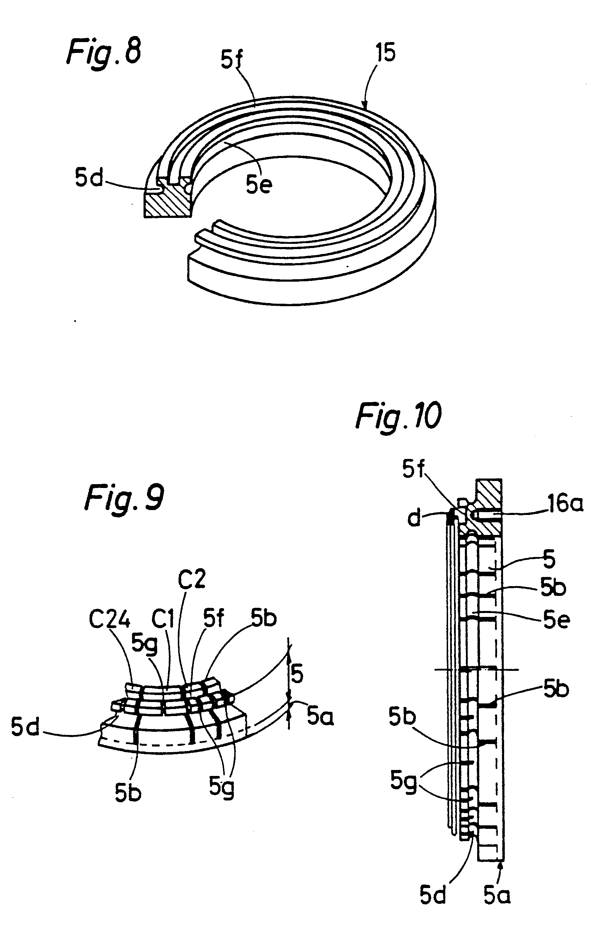

Pour le câblage des bobines individuelles on utilise l'anneau de connexions 5 et dont la fabrication sera décrite plus loin. Cet anneau 5 est subdivisé selon la figure 6 en autant de segments isolés l'un de l'autre qu'il y a de bobines, c'est-à-dire en 24 segments c1 à c24 dans l'exemple considéré. Ces segments en matériau conducteur, en particulier en cuivre, sont séparés par des rainures radiales 5b remplies de matière synthétique pour tenir ensemble les segments en forme d'anneau de connexions 5, comme ceci sera décrit plus en détail plus loin. Les coupes axiales selon les figures 3, 10 et 11 montrent le profil de l'anneau de connexions 5, respectivement de l'un de ses segments c1. Au bord extérieur de chaque segment est prévue une encoche 5c pour le maintien par coincement des extrémités de bobines correspondantes. En outre, l'anneau de connexions 5 présente sur une partie voisine de la partie présentant les encoches 5c et d'un diamètre légèrement plus petit que cette dernière, une première rainure annulaire périphérique 5d (fig. 10), une seconde rainure annulaire 5e sur sa circonférence intérieure et une troisième rainure 5f sur sa face latérale en regard du rotor, à l'état monté.

Comme ceci apparaît à la figure 12, les deux extrémités de chaque bobine sont reliées à deux segments voisins de l'anneau de connexions, la fin d'une bobine et le début de la bobine voisine étant reliés au même segment. La fin de la bobine b24 et le début de la bobine b1 sont ainsi reliés au même segment c1, comme ceci est visible aussi à la figure 6, ces deux extrémités de bobine étant fixées par coincement ensemble dans l'encouche 5c (fig. 11). Le début de la bobine b2 et la fin de la bobine b1 sont reliés ensemble au segment c2, la fin de la bobine b2 et le début de la bobine suivante b3 sont reliés ensemble au segment voisin c3, etc. Toutes les bobines qui ont la même position relativement à une paire de pôles, c'est-à-dire relativement à deux pôles voisins, et par conséquent sont décalées l'une par rapport à l'autre de la valeur de deux divisions polaires, sont excitées dans le même sens et sont par conséquent branchées en parallèle. Selon la figure 12, ce sont ainsi les trois bobines dans chacun des huit groupes de trois qui doivent être branchées en parallèle: b1—b9—b17; b2—b10—b18; etc., jusqu'à b8—b16—b24.

Pour simplifier la disposition du circuit et les fonctions de commutation du circuit de commutation électronique, qui commandent l'excitation des bobines, ces branchements en parallèle sont câblés de manière fixe dans l'anneau de connexions 5; les trois segments constituant les connexions pour les unes ou les autres extrémités des trois bobines de chaque groupe de trois susmentionné sont reliés entre eux par des fils conducteurs. Les segments c1, c9 et c17 sont ainsi reliés ensemble par le fil d1, les segments c2, c10 et c18 par le fil d2, etc. et finalement les segments c8, c16 et c24 par le fil d8, comme ceci est indiqué dans le schéma de câblage selon figure 12 pour les huit conducteurs d1 à d8 et dans la représentation schématique de l'anneau de connexions selon figure 7 pour les fils d1, d2 et d3 par des lignes qui passent à travers le milieu de l'anneau de connexions.

Dans l'exécution pratique ces fils conducteurs de liaison sont avantageusement conduits sur la face de l'anneau de connexions en regard du rotor, le long de la paroi de cet anneau dans la rainure 5f, comme ceci est représenté pour les fils d1 et d2 à la figure 6 et pour quelques uns de ces fils aux figures 3 et 11, où ces fils sont désignés par d. Ils sont soudés aux segments respectifs avant la terminaison de l'anneau de connexions, qui sera décrite plus loin, et avant la connexion des bobines ou fixés par coincement dans des ouvertures ou des encoches prévues à cet effet. L'anneau de connexions est ensuite noyé dans de la matière synthétique 14, à l'aide d'un moule approprié, sur sa circonférence intérieure et sur sa face présentant la rainure 5f avec les fils d, la matiére synthétique remplissant simultanément les rainures radiales 5b séparant les segments les uns des autres comme décrit plus tard.

En raison des liaisons décrites de chaque fois trois segments à l'intérieur de l'anneau de connexions 5, on a seulement 24/3=8 connexions qui sont contrôlables individuellement et qui doivent être conduits vers l'extérieur par huit conducteurs e1—e8. De manière à pouvoir connecter commodément ces huit conducteurs à l'anneau de connexions, chaque troisième segment de l'anneau de connexions présente une largeur égale au double de la largeur des autres segments et il est pourvu d'une vis 16 pour la connexion du conducteur conduisant vers l'extérieur. Dans l'exemple selon la figure 6 il s'agit des segments c1, c4, ..., c22 qui présentent des vis de connexion 16 également représentées aux figures 3 et 11. Dans le moteur monté, les conducteurs e1 à e8 conduisant vers l'extérieur (fig. 12) sont, comme déjà mentionnés, conduits à l'extérieur par le canal 7 ménagé dans le flasque 1 du stator correspondant comme ceci est indiqué à la figure 1 pour un conducteur e et sur l'autre côté du stator pour un conducteur e' traversant le canal 7'.

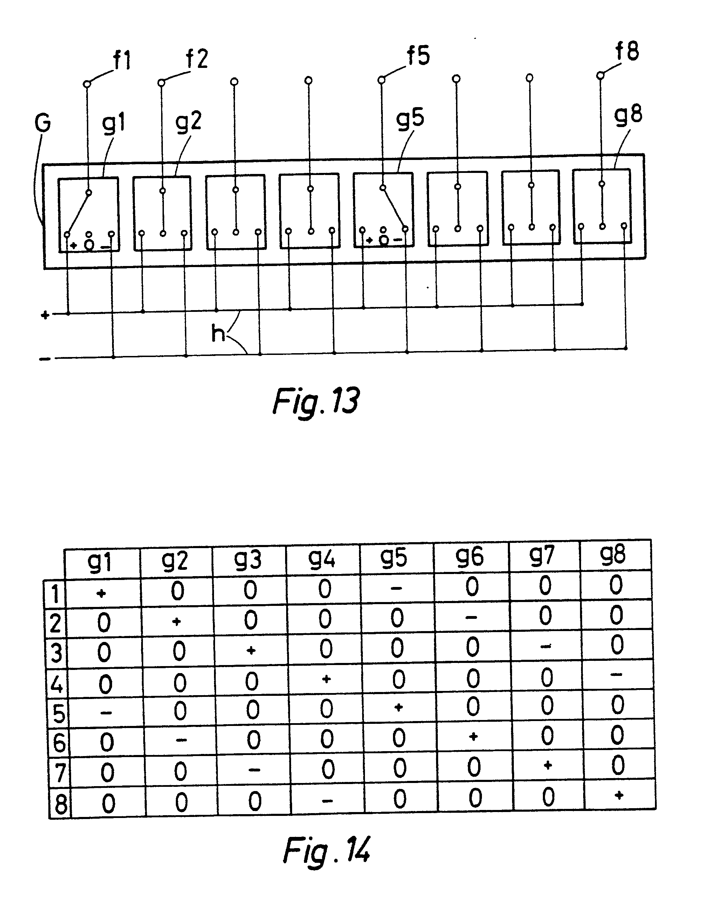

Les bornes extérieures des conducteurs e1 à e8 sont désignées à la figure 12 par les références f1 à f8 et sont, selon le schéma de câblage représenté à la figure 13, connectées à des commutateurs à trois positions g1 à g8 faisant partie du circuit de commutation électronique G. Un circuit de commutation électronique dont les commutateurs électroniques travaillent avec des transistors ou d'autres semi-conducteurs contrôlés est connu en soi et ne fait pas partie de l'objet de la présente invention. Il n'est mentionné ici que pour les besoins de la description du fonctionnement du moteur, respectivement la description de la série d'excitation des bobines du bobinage d'induit. Le fonctionnement de chacun des commutateurs électroniques g1 à g8 est celui d'un commutateur à trois positions, dont le bras de contact peut occuper trois positions différentes: dans la première position, représentée à la figure 13 pour le commutateur électronique g1, le bras de contact est à la borne + qui est reliée aux conducteurs positifs des conducteurs d'alimentation de la source à courant continu h. Dans la deuxième position le bras de contact, comme représenté à la figure 12 pour les commutateurs électroniques g2, g3, g4, g6, g7 et g8, se trouve sur la borne 0, les alimentations des bornes correspondantes f2 à f4 et f6 à f8 étant alors interrompues. Dans la troisième position le bras de contact, comme représenté à la figure 13 pour le commutateur électronique g5, est à la borne-—reliée aux conducteurs négatifs de la ligne d'alimentation h.

Dans l'exemple considéré selon les figures 12 et 13 les segments c1, c9 et c17 de l'anneau de connexions sont reliés par le conducteur e1 et la borne extérieure f1 ainsi qu'à travers le commutateur électronique g1 à la ligne + de l'alimentation et les segments c5, c13 et c21 sont reliés par le conducteur e5 et la borne extérieure f5, ainsi que le commutateur électronique g5 à la ligne—de l'alimentation, tandis que les autres segments sont coupés de l'alimentation, les bobines sont donc connectées de la façon suivante: quatre bobines voisines, qui se trouvent au voisinage de deux pôles voisins, sont connectées en série. Ces six groupes de quatre comprenant chacun quatre bobines connectées l'une à la suite de l'autre, sont les suivants: dans la zone de la paire de pôles I—II les bobines b1 à b4, dans lesquelles le courant circule du segment c1 à travers les bobines b1, b2, b3 et b4 vers le segment c5; dans la zone de la paire de pôles II—III les bobines b5 à b8 dans lesquelles le courant circule du segment c9 à travers les bobines b8, b7, b6 et b5 vers le segment c5; dans la zone de la paire de pôles III—IV les bobines b9 à b12 dans lesquelles le courant circule du segment c9 à travers les bobines b9 à b12 vers le segment c13; dans la zone de la paire de pôles IV—V les bobines b13 à b16, dans lesquelles le courant circule du segment c17 à travers les bobines b16, b15, b14 et b13 vers le segment c13; dans la zone de la paire de pôles V—VI les bobines b17 à b20 dans lesquelles le courant circule du segment c17 à travers les bobines b17, b18, b19 et b20 vers le segment c21; et finalement dans la zone de la paire de pôles VI—I les bobines b21 à b24, dans lesquelles le courant circule du segment c1 à travers les bobines b24, b23, b22 et b21 vers le segment c21. Dans l'exemple considéré on ne trouve ainsi que quatre bobines connectées l'une à la suite de l'autre (m=4) dans la zone de deux pôles voisins, alors que pratiquement on aura de préférence 8 bobines (m=8).

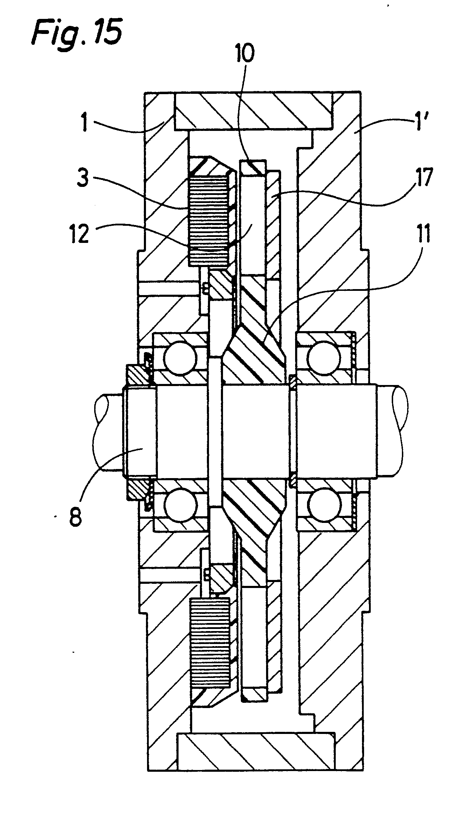

Après que le rotor a tourné de 1/24 de tour, le codeur commande le circuit de commutation G de telle sorte que les segments c2, c10 et c18 sont connectés à travers la ligne e2 et la borne extérieure f2 du commutateur électronique g2 aux conducteurs + de la ligne d'alimentation h et les segments c6, c14 et c22 sont connectés à travers la ligne e6 et la borne extérieure f6 par le commutateur électronique g6 à la borne—de la ligne d'alimentation, tandis que tous les autres segments sont coupés de l'alimentation. Les groupes constitués de quatre bobines connectées l'une derrière l'autre se déplacent ainsi vers la droite dans la figure 12 d'une bobine. Après une autre rotation du rotor de 1/24 de tour la commutation suivante a lieu, de manière analogue etc. et après un tiers de tour du rotor, c'est-à-dire après huit commutations, le cycle décrit se répète. La tabelle selon figure 14 montre les huits cycles de commutation différentes des commutateurs électroniques g1 à g8. On reconnaît que lors du cinquième cycle de commutation, partant de la position du rotor représenté à la figure 12, les segments c1, c9 et c17 sont reliés à travers le commutateur g1 au conducteur—de la ligne d'alimentation h et les segments c5, c13 et c22 sont reliés au conducteur + de la ligne d'alimentation h à travers le commutateur g5, de telle sorte qu'après 1/6 de tour du rotor toutes les bobines sont excitées en sens inverse. Pendant un tour complet du rotor le cycle décrit se répète donc 3 fois.

Tous les commutateurs électroniques g1 à g8 du circuit de commutation G sont commandés, de manière connue en soi, par le codeur rotatif synchronisé avec le rotor, en fonction de la position angulaire du rotor, comme mentionné en relation avec la figure 1. Ce codeur photo-électrique comprend dans l'exemple considéré huit unités émetteur-récepteur arrangées le long d'un arc de cercle et le disque a trois encoches qui sont régulièrement décalées de 120° l'une par rapport à l'autre de telle manière que pendant chaque rotation de l'arbre moteur le circuit électronique G est commuté 3×8=24 fois. Il peut également s'agir d'un codeur inductif ou d'un générateur à effet Hall connu ou tout autre type de codeur.

On décrira maintenant la fabrication d'un induit 3, respectivement 3' avec ses différentes parties. Les bobines d'un bobinage d'induit 4, respectivement 4' sont bobinées en continu au moyen d'une machine à bobiner connue (brevet FR 2.471.074) en forme de rosette à partir d'un fils isolé avec une laque de résine synthétique. Les liaisons entre les bobines bobinées l'une sur l'autre se trouvent alors au centre de la rosette et la longueur de la section de fil constituant cette liaison, replié plusieurs fois dans l'espace central de la rosette, est dimensionnée de telle sorte qu'ulterieurement, après la séparation des bobines, il reste des fins de bobines suffisamment longues pour le câblage. A travers le bobinage terminé est envoyé un courant assez fort pour que l'isolation en résine synthétique du fil ramollisse et qu'après le refroidissement subséquent du bobinage, les isolations des fils voisins collent entre elles. On obtient ainsi un bobinage rigide auto-portant se présentant sous la forme d'un panier plat, dont la zone périphérique, qui comprend un grand nombre de segments de fils s'étendant selon la périphérie, à savoir les côtés extérieurs superposés des bobines, forme une surépaisseur en forme de bourrelet partiellement replié d'un côté.

La prochaine phase consiste à séparer toutes les bobines les unes des autres, dont les extrémités se trouvent dans la zone centrale de la rosette, par sectionnement des segments de fils reliant encore les bobines, respectivement par séparation des liaisons des bobines, ce qui donne une rosette comme montré à la figure 4.

L'anneau de connexions 5, respectivement 5' est fabriqué de la manière suivante: on part d'une ébauche en cuivre de forme annulaire 15 (fig. 8) auquel on donne le profil désiré par tournage ou fraisage pour obtenir les rainures 5d, 5e et 5f mentionnées plus haut et comme représenté à la figure 8. On forme ensuite les rainures radiales 5b, comme représenté à la figure 9 en fraisant le côté présentant la rainure annulaire 5f, à une profondeur telle qu'il reste encore une zone 5a présentant une épaisseur d'environ 1 mm ou quelques millimètres sur le côté de l'anneau opposé à la rainure 5f, de manière à maintenir ensemble l'anneau de connexions avec ses segments c1, c2, etc., ainsi formés. On fraise également au milieu des segments c1, c2, etc. des rainures 5g moins profondes que les rainures 5b, sur lesquelles on fixe les fils conducteurs d destinés à relier les paires de segments décrites plus haut, aux segments concernés, les fils d'étant disposés selon un arc de cercle à l'intérieur de cette rainure 5f. La figure 10 montre une coupe axiale de l'anneau usiné selon la figure 9 avec schématiquement montrés les fils conducteurs d courbés le long d'un arc de cercle et qui devraient être insérés dans la rainure 5f. On n'a pas représenté les rainures 5c sur la figure 10.

L'anneau de connexions 5 ainsi préparé et muni des fils d est ensuite posé dans un moule de forme annulaire et noyé dans une matière synthétique 14 comme déjà décrit plus haut. Lors de cette opération les fils conducteurs d sont totalement noyés dans la matière synthétique qui remplit la rainure 5f, la matière synthétique recouvrant également la circonférence intérieure de l'anneau de connexions en remplissant la rainure annulaire 5e et la circonférence extérieure de l'anneau de connexions en remplissant la rainure annulaire 5d. La matière synthétique 14 remplit naturellement aussi les rainures radiales 5b, et pénétrant dans les rainures radiales et les rainures annulaires, assure sa liaison solide avec l'anneau métallique. On découpe ensuite dans le milieu segments c1, c2, etc. les encoches 5c (figure et 11) et on forme des trous taraudés 16a (figure 10) dans les segments auxquels seront plus tard connectées les liaisons conduisant vers l'extérieure. On a représenté, pour des raisons de commodité, les trous 16a sur l'anneau 5 de la figure 10 mais ils ne sont crées, comme déjà mentionne, qu'après le moulage de l'anneau 5 dans la matière synthétique 14.

La face de l'anneau de connexions opposée à la rainure 5f est ensuite usinée jusqu'à ce que la zone continue 5a libre de rainures radiales (fig. 10) soit enlevée de telle sorte que les segments individuels c1, c2, etc. sont séparés les uns des autres, isolés et ne sont plus maintenus ensemble que par la matière synthétique 14 comme représenté à la figure 11.

La phase de fabrication suivante consiste à fixer le bobinage d'induit avec ses bobines à l'anneau de connexions 5, les extrémités des bobines individuelles étant fixées aux segments correspondants par coincement dans les encoches 5c comme déjà décrit. A la figure 11, on a indiqué la fixation de l'une des extrémités des bobines b1 et b24 dans l'encoche 5c du segment c1. L'unite constituée de l'anneau de connexions du bobinage d'induit est terminée par le montage des vis de connexion 16 aux huit segments mentionnés plus haut. Ces vis peuvent naturellement être montées avant la liaison du bobinage d'induit avec l'anneau de connexions.

La dernière phase de la fabrication de l'induit consiste à disposer dans un moule approprié l'ensemble constitué du bobinage d'induit 4 et de l'anneau de connexions 5 avec le fer d'induit 6 préalablement enroulées et posées sur la face extérieure des bobines, c'est-à-dire sur la face des bobines en regard du flasque du stator, et à noyer le tout dans la matière synthétique 13, comme représenté à la figure 3. Les matières plastiques 13 et 14 sont de préférence une résine epoxyde. Le bobinage d'induit est ainsi complètement noyé dans la résine synthétique 14, qui s'étend en outre sur toute la périphérie du fer 6 dans l'exemple considéré; l'espace entre la périphérie de l'anneau de connexions 5 et les connexions des bobines conduisant aux encoches 5c, respectivement la périphérie du fer 6, est rempli de matière synthétique 14 jusqu'à la hauteur de la face extérieure de l'anneau de connexions 5. De cette manière on obtient un induit préfabriqué compact comprenant un anneau de connexions câblé aux segments duquel est connecté le bobinage d'induit 4, et l'anneau de fer 6. Il ne reste qu'à fixer cet induit 3 sur la face intérieure d'un flasque de moteur 1, après qu'au moyen des vis 16, les conducteurs extérieurs e ont été connectés aux segments correspondants de l'anneau de connexions conduits à travers les canaux correspondant 7 dans le flasque du stator.

L'induit décrit se distingue, d'une part, par sa fabrication nouvelle et rationnelle et, d'autre part, en ce que les fils des bobines ne sont pas disposés, comme d'ordinaire, dans des rainures des tôles. La fabrication du fer de l'induit et le montage du bobinage d'induit sur le fer sont ainsi sensiblement simplifiés. En outre, on supprime la limitation de la quantité de cuivre, respectivement de l'épaisseur des fils utilisés pour le bobinage d'induit due à la grandeur des rainures des tôles d'induit. Il est possible au besoin de construire des bobinages d'induit avec des quantités de cuivre, respectivement des fils de diamètres très différents et des nombres de tours très différents des bobines et de surmouler sans autre avec une matière synthétique les mêmes fers d'induit préfabriqués avec des anneaux de connexions correspondant, la pose des fils de bobines dans les rainures des tôles d'induit, qui doivent être, adaptées à l'épaisseur des fils étant supprimée. Par la suppression des encoches ce dispositif présente une grande régularité de rotation, même à très faibles vitesses.

On constate que le moteur représenté aux figures 1 et 2 comprend un rotor en forme de disque de chaque côté duquel se trouve un bobinage statorique fixe, de telle sorte que l'on a en fait deux moteurs côte à côte dont le rotor est commun.

Dans une forme d'exécution simplifiée du moteur, telle que représentée à la figure 15, le moteur présente un seul induit 3 sur le flasque 1, induit qui peut être réalisé exactement conmme dans l'exemple selon la figure 1. Le flasque opposé 1' sert uniquement pour fermer le boîtier. Pour la fermeture du circuit magnétique du flux magnétique des aimants permanents 12 du rotor 10 sur la face du rotor opposée à l'induit 3, est fixé, sur cette face du rotor un anneau en fer 17 en contact avec tous les pôles des aimants permanents 12, de telle sorte que les flux magnétiques de ceux-ci peuvent se fermer à travers cet anneau 17. Pour le reste, le rotor peut être construit exactement de la même manière que dans l'exemple selon les figures 1 et 2.

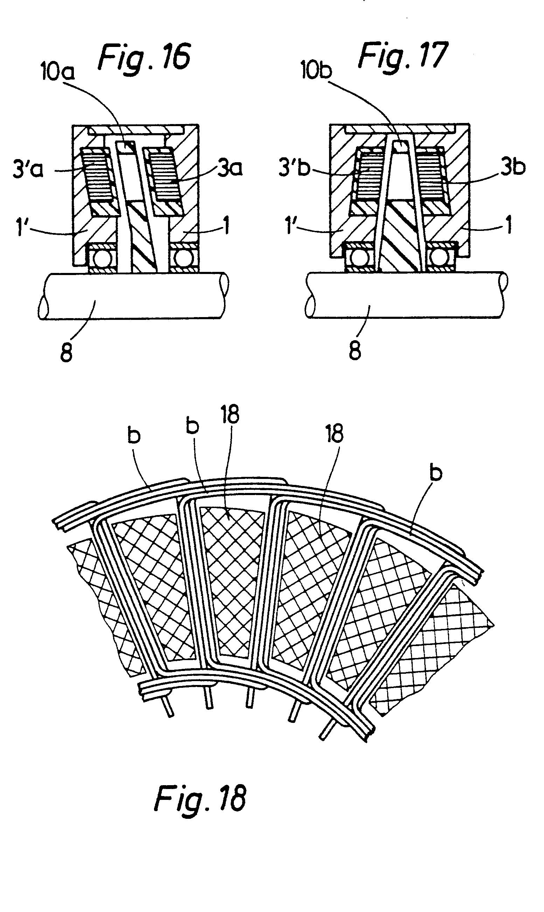

Selon une autre forme d'exécution du moteur, représentée schématiquement à la figure 16 le rotor 10a, peut être légèrement conique, en forme d'assiette, tandis que les deux induits 3a et 3'a situés de chaque côté peuvent avoir une forme adaptée à la forme du rotor, c'est-à-dire présenter des conicités conjuguées et opposées.

Dans la forme d'exécution représentée également schématiquement à la figure 17, le rotor 10b est biconique et les deux induits 3b et 3'b disposés de chaque côté sur les flasques de stator 1 et 1' sont par leur conicité adaptés aux deux faces de rotor inclinées relativement à l'axe 8 du moteur.

La conicité du rotor selon la figure 16 ou 17 apporte une plus grande rigidité, avant tout pour éviter un déplacement des aimants permanents fortement sollicités axialement par le fer des stators. En outre, dans le cas de la biconicité selon la figure 17, la masse principale du rotor 10b est plus proche de l'arbre 8, ce que a pour effet de réduire son moment d'inertie.

Dans une forme d'exécution particulièrement judicieuse d'un induit dans un moteur selon l'invention, les espaces triangulaires, respectivement en forme de segments d'anneau (fig. 18) entre les côtés dirigés radialement des bobines individuelles b sont remplis par des pièces 18 en forme de coin, respectivement de secteur en matériau ferro-magnétique, avant le surmoulage du bobinage par la matière synthétique. Ces pièces 18 sont, vues en direction de l'axe du moteur, approximativement aussi épaisses que le bobinage d'induit lui-même et renforcent ainsi le champ d'induit, en réduisant l'entrefer d'une valeur correspondant approximativement à l'épaisseur du bobinage. Si d'autre part, on veut maintenir constant le champ d'induit, les aimants permanents peuvent avoir une épaisseur moindre en utilisant les fers d'induit 18 remplissant les espaces vides des bobines, ce qui a pour effet d'abaisser le moment d'inertie du rotor. Les fers d'induit 18 peuvent avantageusement être constitués d'une manière connue en soi d'une poudre de fer spéciale, laquelle, mélangée avec une masse collante, puis formée sous pression de telle sorte que la conductibilité dans la direction radiale est très faible pour empêcher la formation de courant de Foucault.

Des moteurs selon l'invention peuvent être étendus de telle sorte que l'on prévoit sur le même arbre deux ou plusieurs rotors en forme de disque, qui le cas échéant peuvent avoir des fonctions différentes. On peut fixer sur l'arbre du rotor au moins un disque qui forme partie d'un codeur rotatif pour la commande du circuit de commutation électronique et/ou constituant une partie d'un frein électro-magnétique. Il est aussi possible que le rotor en plus de sa fonction moteur, peut être en même temps une partie d'un frein mécanique. Ces différentes fonctions peuvent être également effectuées par des disques spécialisés.

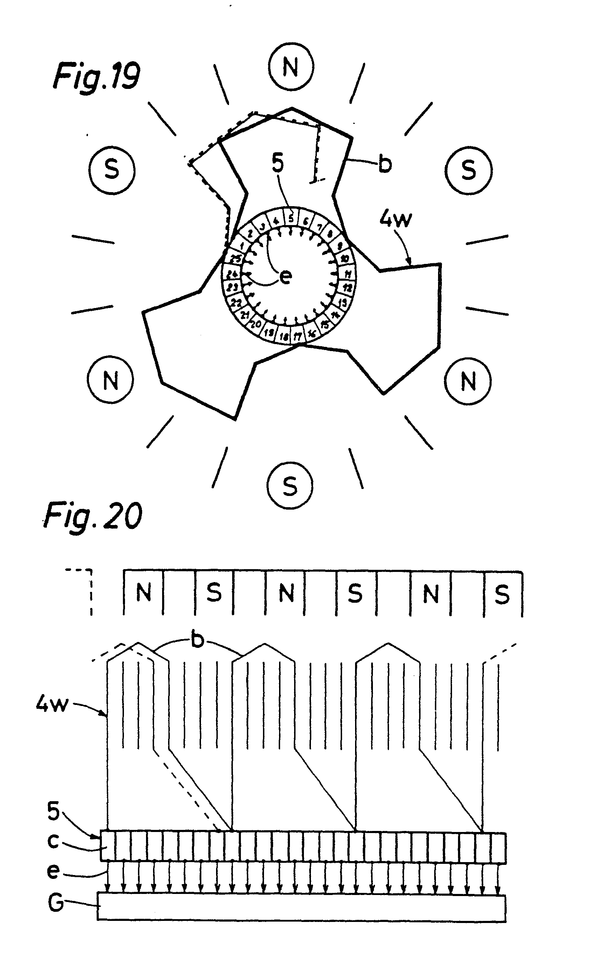

L'invention n'est pas limitée aux formes d'exécution décrites, mais s'étend à toute variante d'exécution en ce qui concerne la forme du moteur et de l'induit et de son bobinage, dans le cadre de l'invention telle que revendiquée. Il est ainsi possible, par exemple, au lieu du bobinage d'induit imbriqué ou en boucle décrit dans l'exemple d'exécution précédant, d'utiliser un bobinage d'induit ondulé comme ceci est également usuel dans les moteurs à courant continu conventionnels et représenté sur les figures 19 et 20 qui correspondant à la représentation des figures 6 et 12, respectivement. Tandis qu dans un bobinage imbriqué les bobines se trouvant immédiatement l'une à côté de l'autre sont commutées en série, dans un bobinage ondulé, ce sont les bobines séparées de la valeur d'environ une double division polaire. Dans l'exemple considéré (fig. 19 et 20) le bobinage ondulé 4W comprend 25 bobines b connectées de la manière montrée à l'anneau de connexions 5 qui comprend 25 segments c. Les fils conducteurs internes de l'anneau de connexions sont supprimés et chaque segment c de cet anneau est lié a un conducteur extérieur e pour être commuté individuellement par un circuit électronique de commutation G.

## Revendications

1. Moteur à courant continu sans collecteur à commutation électronique à excitation à aimants permanents comprenant au moins un rotor (10) en forme de disque portant plusieurs aimants permanents (12) dont les axes magnétiques s'étendent parallèlement à l'axe du moteur ou légèrement conique par rapport à cet axe et comprenant, au moins un induit fixe pourvu d'un bobinage d'induit (3, 3') plat monté sur la face sensiblement plane d'un fer d'induit constitué d'un anneau coaxial à l'axe du rotor formé de préférence d'un ruban de tôle magnétique muni d'une couche isolante et enroulé sur lui-même, le bobinage d'induit (3, 3') étant commandable par un codeur solidaire en rotation de l'arbre moteur (8), à travers un circuit de commutation électronique, caractérisé par le fait que le bobinage (4, 4') d'induit (3, 3') est un bobinage imbriqué ou un bobinage ondulé série monté à la manière d'un bobinage d'un moteur à courant continu commutable, comprenant une multitude de bobines (b1 à b24) se recouvrant mutuellement partiellement et formant une rosette plate, que ledit fer (6, 6') d'induit (3, 3') est sans rainure et que l'induit (3, 3') est en outre muni d'un anneau de connexions (5, 5') coaxial à l'arbre moteur (8), cet anneau de connexions (5, 5') étant subdivisé en segments (c1 à c24) isolés électriquement l'un de l'autre pour la connexion des extrémités des bobines (b1 à b24), le nombre de ces segments (c1 à c24) étant au moins aussi grand que le nombre des extrémités des bobines (b1 à b24) à connecter séparément l'une de l'autre, tous les segments (c1, c4, c7, c10, c13, c16, c19, c22) connectant les bobines à exciter séparément étant pourvus d'une prise (16) pour la liaison des lignes (e1 à e8) conduisant à l'extérieur, aux circuits de commutation (g1 à g8) à travers le boîtier du stator (1, 1'), et en ce que le bobinage d'induit (4, 4'), l'anneau de connexions (5, 5') et le fer d'induit (6, 6') sont noyés partiellement dans une masse de matière synthétique (13, 13') et constituent un module compact préfabriqué, la bobinage (4, 4') d'induit (3, 3') étant disposé de préférence sur le côté du fer (6, 6') d'induit en regard du rotor (10).

2. Moteur à courant continu selon la revendication 1, caractérisé en ce que le bobinage (4, 4') d'induit (3, 3') est un bobinage imbriqué, dans lequel le nombre des bobines (b1 à b24) est un multiple du nombre des paires de pôles présentes sur l'un des côtés du rotor (10) et dans lequel toutes les bobines devant être excitées simultanément en parallèle sont branchées en parallèle dans l'induit (3, 3') par un câblage approprié.

3. Moteur selon les revendication 1 à 2, caractérisé en ce qu'à chaque segment (1 à 24) dudit anneau de connexions (5, 5') est relié le début d'une bobine et la fin d'une autre bobine de manière à relier toutes les bobines (b1 à b24) en serie, les groupes de segments de l'anneau de connexions (5, 5') auxquels sont connectées les fins des bobines devant être excitées en parallèle, étant reliés entre eux par des fils conducteurs (d1 à d8) s'étendant de préférence en arc de cercle le long de l'anneau de connexions (5, 5'), notamment enserrés dans une rainure (5f) de celui-ci, noyés dans ladite matière synthétique (14), un segment (c1, c4, c7, c10, c13, c19, c22), de chacun des groupes de segments de l'anneau de connexions (5, 5') etant pourvu de ladite prise (16), ces segments étant de préférence plus longs que les autres segments.

4. Moteur à courant continu selon l'une des revendications 1 à 3, caractérisé en ce qu'il comporte deux induits (3, 3') semblables disposés symètriquement de chaque côté du rotor (10) et fixés à des flasques (1, 1') du stator disposés l'un en face de l'autre, ces deux induits (3, 3') déterminant un entrefer avec les faces polaires, de préférence libres, des aimants permanents (12) du rotor (10) situés sur les côtés du rotor respectivement en regard de chaque induit (3, 3').

5. Moteur à courant continu selon l'une des revendications 1 à 4, caractérisé en ce qu'il comprend un induit (3) de l'un des côtés du rotor (10) et en ce qu'une partie de fer (17) en forme annulaire circulaire en matériau magnétisable est fixée sur l'autre côté du rotor (10), cette partie de fer (17) pontant toutes les faces polaires des aimants permanents (12) sur ce côté du rotor (10) pour la déviation des flux magnétiques.

6. Moteur à courant continu selon l'une des revendications 1 à 5, caractérisé en ce que le rotor (10a) présente une forme légèrement conique, respectivement une forme en assiette et que l'induit, respectivement les induits, (3, 3'a) est adapté à cette forme, en ce que concerne son côté en regard du rotor (10a), pour l'obtention d'un entrefer de largeur constante.

7. Moteur à courant continu selon l'une des revendications 1 à 5, caractérisé en ce que le rotor (10b) présente une forme biconique allant en s'amincissant radialement vers l'extérieur et que l'induit, respectivement les induits (3b, 3'b) présent une forme adaptée à la forme du rotor (10b) de telle manière que la largeur de l'entrefer est constante.

8. Moteur à courant continu selon la revendication 1, caractérisé en ce que les espaces entre les côtés radiaux de deux bobines voisines (b) sont remplis d'éléments (18) en forme de segments d'anneau ou en forme de coins en matériau magnétisable et, dans le cas de bobinage d'induit noyés dans une matière synthétique, sont également noyés dans cette matière synthétique.

9. Moteur à courant continu selon l'une des revendications 1 à 8, caractérisé en ce que le rotor (10, 10a, 10b) est en même temps une partie d'un frein électro-magnétique.

10. Moteur à courant continu selon l'une des revendications 1 à 9, caractérisé en ce que sur l'arbre (8) du rotor (10) est en outre fixé au moins un disque (19) solidaire en rotation du rotor, disque formant partie d'un codeur rotatif pour la commande du circuit de commutation électronique et/ou constituant une partie d'un frein électro-magnétique.

## Patentansprüche

1. Kollektorloser Gleichstrommotor mit elektronischer Kommutierung und Dauermagneterregung, mit wenigstens einem scheibenförmigen Läufer (10), der mehrere Dauermagnete (12) trägt, deren magnetische Achsen sich parallel zur Motorachse oder leicht konisch in Bezug auf diese Achse erstrecken, und mit wenigstens einem festen Anker (3, 3'), der mit einer flachen Ankerwicklung (4, 4') versehen ist, welche auf der im wesentlichen ebenen Seite eines Ankereisens montiert ist, wobei dieses Ankereisen aus einem koaxial zur Läuferachse angeordnetem Ring besteht, der vorzugsweise aus einem Band aus einem magnetischen Blech gebildet ist, welches mit einer Isolierschicht versehen und aufgewickelt ist, und wobei die Ankerwicklung (4, 4') durch einen drehfest auf der Motorwelle (8) sitzenden Codierer über eine elektronische Kommutierungsschaltung steuerbar ist, dadurch gekennzeichnet, dass die Wicklung (4, 4') des Ankers (3, 3') eine Schleifenwicklung oder eine Wellenreihenwicklung ist, welche nach Art einer Wicklung eines kommutierbaren Gleichstrommotors angeordnet ist und eine Vielzahl von einander teilweise überlappenden Spulen (b1 bis b24) umfasst, die eine flache Rosette bilden, dass das erwähnte Eisen (6, 6') des Ankers (3, 3') keine Nuten aufweist, dass der Anker (3, 3') ausserdem mit einem koaxial zur Motorwelle (8) liegenden Verbindungsring (5, 5') versehen ist, welcher in elektrisch voneinander isolierte Segmente (c1 bis c24) unterteilt ist, um die Enden der Spulen (b1 bis b27) zu verbinden, wobei die Anzahl dieser Segmente (c1 bis c24) wenigstens so gross wie die Anzahl der Enden der getrennt voneinander zu verbindenden Spulen (b1 bis b24) ist und alle Segmente (c1, c4, c7, c10, c13, c16, c19, c22), die die getrennt zu erregenden Spulen verbinden, mit einem Abgriff (16) zum Anschluss der durch das Ständergehäuse (1, 1') hindurch nach aussen führenden Leitungen (e1 bis e8) an die Kommutierungsschaltungen (g1 bis g8) versehen sind, und dass die Ankerwicklung (4, 4'), der Verbindungsring (5, 5') und das Ankereisen (6, 6') teilweise in einer Masse aus Kunstharz (13, 13') eingebettet sind und einen vorgefertigten, kompakten Modul bilden, wobei die Ankerwicklung (4, 4') vorzugsweise auf der dem Läufer (10) zugewandten Seite des Ankereisens (6, 6') angeordnet ist.

2. Gleichstrommotor nach Anspruch 1, dadurch gekennzeichnet, dass die Wicklung (4, 4') des Ankers (3, 3') eine Schleifenwicklung ist, in welcher die Anzahl der Spulen (b1 bis b24) ein Vielfaches der Anzahl der auf einer der Seiten des Läufers (10) vorhandenen Polpaare beträgt und bei welcher alle Spulen, welche gleichzeitig parallel erregt werden müssen, durch eine geeignete Verdrahtung im Anker (3, 3') parallelgeschaltet sind.

3. Gleichstrommotor nach den Ansprüchen 1 und 2, dadurch gekennzeichnet, dass jedes Segment (c1 bis c24) des erwähnten Verbindungsrings (5, 5') mit dem Anfang einer Spule und dem Ende einer anderen Spule derart verbunden ist, dass alle Spulen (b1 bis b24) in Reihe geschaltet sind, dass die Gruppen der Segmente des Verbindungsrings (5, 5'), an welche die Enden der parallel zu erregenden Spulen angeschlossen sind, untereinander durch Leiter (d1 bis d8) verbunden sind, die sich vorzugsweise kreisbogenförmig längs des Verbindungsrings (5, 5') erstrecken und insbesondere in eine Nut (5f) desselben eingelegt und in das erwähnte Kunstharz (14) eingebettet sind, und dass eine Segment (c1, c4, c7, c10, c13, c16, c19, c22) jeder Gruppe von Segmenten des Verbindungsrings (5, 5') mit dem erwähnten Abgriff (16) versehen, ist, wobei diese Segmente vorzugsweise länger als die anderen Segmente sind.

4. Gleichstrommotor nach einem der Ansprüche 1 bis 3, dadurch gekennzeichnet, dass er zwei ähnliche, symmetrisch auf beiden Seiten des Läufers (10) angeordnete Anker (3, 3') aufweist, welche an einander gegenüberliegenden Flanschen (1, 1') des Ständers befestigt sind, und dass jeder dieser beiden Anker (3, 3') mit den ihm zugewandten, auf der betreffenden Läuferseite liegenden, vorzugsweise freien Polflächen der Dauermagnete (12) des Läufers (10) je einen Luftspalt bestimmt.

5. Gleichstrommotor nach einem der Ansprüche 1 bis 4, dadurch gekennzeichnet, dass er einen Anker (3) auf einer der Seiten des Läufers (10) aufweist und dass ein Eisenteil (17) aus magnetisierbaren Material in Form eines Kreisrings auf der anderen Seite des Läufers (10) befestigt ist, wobei dieses Eisenteil (17) alle Polflächen der Dauermagnete (12) auf dieser Seite des Läufers (10) überbrückt, um den Magnetfluss abzulenken.

6. Gleichstrommotor nach einem der Ansprüche 1 bis 5, dadurch gekennzeichnet, dass der Läufer (10a) eine leicht konische bzw. tellerförmige Gestalt hat und dass der Anker bzw. die Anker (3, 3'a), was die dem Läufer (10a) zugewandte Seite anbelangt, dieser Gestalt angepasst ist bzw. sind, um einen Luftspalt konstanter Breite zu erhalten.

7. Gleichstrommotor nach einem der Ansprüche 1 bis 5, dadurch gekennzeichnet, dass der Läufer (10b) eine bikonische Gestalt hat, die sich radial nach aussen verjüngt, und dass der Anker bzw. die Anker (3b, 3'b), eine dieser Gestalt des Rotors (10b) angepasste Gestalt hat bzw. haben, derart, dass die Breite des Luftspalts konstant ist.

8. Gleichstrommotor nach Anspruch 1, dadurch gekennzeichnet, dass die Abstände zwischen den radialen Seiten zweier benachbarter Spulen (b) mit Elementen (18) in Form von Kreisringsegmenten oder in Form von Keilen aus magnetisierbarem Material ausgefüllt sind, welche im Falle von in Kunstharz eingebetteten Ankerwicklungen ebenfalls in dieses Kunstharz eingebettet sind.

9. Gleichstrommotor nach einem der Ansprüche 1 bis 8, dadurch gekennzeichnet, dass der Läufer (10, 10a, 10b) gleichzeitig ein Teil einer elektromagnetischen Bremse bildet.

10. Gleichstrommotor nach einem der Ansprüche 1 bis 9, dadurch gekennzeichnet, dass auf der Welle (8) des Läufers (10) ausserdem wenigstens eine Scheibe (19) drehfest mit dem Läufer verbunden ist und diese Scheibe ein Teil eines drehenden Codierers zur Steuerung der elektronischen Kommutierungschaltung bildet und/oder ein Teil einer elektromagnetischen Bremse darstellt.

## Claims

1. A commutatorless direct-current motor with electronic commutation and permanent magnet energization, which comprises at least one disc-shaped rotor (10) carrying a plurality of permanent magnets (12) having their magnetic axes disposed parallel to the motor axis or slightly inclined conically in relation thereto, and comprising at least one fixed armature (3, 3') provided with a flat armature winding (4, 4') and mounted on the substantially flat face of an armature iron consisting of a ring coaxial to the rotor axis, said ring being formed preferably from a band of magnetic sheet metal covered with an insulating layer and coiled on itself, said armature winding (4, 4') being controlled by means of a coder rotatably solid with the motor shaft (8), through an electronic commutation circuit, characterized by the fact that the armature winding (4, 4') is a lap winding or a wave series winding mounted in the fashion of the winding of a commutable direct-current motor, comprising a plurality of coils partially overlapping each other and forming a flat rosette, that said iron (6, 6') of the armature (3, 3') has no slots and that said armature (3, 3') comprises moreover a connection ring (5, 5') coaxial to the motor shaft (8) and divided into segments (c1 to c24) electrically insulated from each other for connecting the ends of the coils (b1 to b24), the number of said segments (c1 to c24) being at least as high as the number of the ends of said coils (b1 to b24) to be connected separately, all the segments (c1, c4, c7, c10, c13, c16, c19, c22) connecting the coils to be energized separately being provided with a tap (16) for connecting the lines (e1 to e8) that are leading outwards, to the commutation circuits (g1 to g8) through the stator casing (1, 1'), and that the armature winding (4, 4'), the connection ring (5, 5') and the armature iron (6, 6') are partially embedded in a mass of synthetic resin (13, 13') and constitute a compact, prefabricated module, the armature winding (4, 4') being disposed preferably on the side of the armature iron (6, 6') facing the rotor (10).

2. The direct-current motor of claim 1, characterized by the fact that said armature winding (4, 4') is a lap winding in which the number of coils (b1 to b24) is a multiple of the number of pairs of poles disposed on one side of said rotor (10) and wherein all the coils to be energized simultaneously in parallel are connected in parallel in said armature (3, 3') by means of suitable wiring.

3. The direct-current motor of claims 1 and 2, characterized by the fact, that each segment (c1 to c24) of said connection ring (5, 5') is connected to the input end of a coil and to the output end of another coil so as to connect all the coils (b1 to b24) in series, the groups of segments of the connection ring (5, 5') to which the ends of the coils to be energized in parallel are connected being interconnected by conducting wires (d1 to d8) forming preferably an arc of a circle along said connection ring (5, 5'), notably by being wedged in a slot (5f) thereof and embedded in said synthetic resin (14), one segment (c1, c4, c7, c10, c13, c16, c19, c22) of each segment group of said connection ring (5, 5') being provided with said tap (16), said segments being preferably longer than the other segments.

4. The direct-current motor of any of claims 1 to 3, characterized by the fact, that two similar armatures (3, 3') are disposed symmetrically on either side of the rotor (10) and secured to flanges (1, 1') of the stator disposed in face to face relationship, said two armatures (3, 3') forming an air gap with the preferably free pole faces of the permanent magnets (12) of the rotor (10), said pole faces being disposed laterally on the rotor facing each armature (3, 3'), respectively.

5. The direct-current motor of any of claims 1 to 4, characterized by the fact, that an armature (3) is provided on one side of said rotor (10) and that an iron member (17) of circular annular configuration, made of magnetizable material, is secured to the other side of said rotor (10), said iron member (17) bridging all the pole faces of said permanent magnets (12) on this side of the rotor (10) for deflecting the magnetic currents.

6. The direct-current motor of any of claims 1 to 5, characterized by the fact, that the rotor (10a) has a slightly tapered or dished configuration, and that the armature or armatures (3, 3a) being adapted to this configuration, as far as the armature side facing the rotor (10a) is concerned, for obtaining an air gap having a constant width.

7. The direct-current motor of any of claims 1 to 6 characterized by the fact, that the rotor (10b) has a biconical configuration thinning down radially outwards and that the armature or armatures (3, 3') having a shape adapted to the configuration of said rotor (10b) in such a manner that the air gap remains constant.

8. The direct-current motor of claim 1, characterized by the fact, that the spaces left between the radial sides of two adjacent coils (b) are filled with elements (18) having the shape of ring segments or of wedges of magnetizable material and which, in the case of armature windings embedded in a synthetic resin, are also embedded in this synthetic resin.

9. The direct-current motor of any of claims 1 to 8, characterized by the fact, that the rotor (10, 10a, 10b) is at the same time one member of an electromagnetic brake.

10. The direct-current motor of any claims 1 to 9, characterized by the fact, that the rotor shaft (8) has also secured thereto at least one disc (19) rotatably rigid with said rotor, said disc being part of a rotary coder for controlling the electronic commutation circuit and/or constituting one member of an electromagnetic brake.

*Fig.1*

# Fig. 2

# Fig. 3

4

*Fig. 4*

b

*Fig. 5*

*Fig. 6*

*Fig. 7*

*Fig.8*

*Fig.9*

*Fig.10*

Fig.11

Fig.12

0 123 347

Fig.13

| | g1 | g2 | g3 | g4 | g5 | g6 | g7 | g8 |
|---|---|---|---|---|---|---|---|---|
| 1 | + | 0 | 0 | 0 | − | 0 | 0 | 0 |
| 2 | 0 | + | 0 | 0 | 0 | − | 0 | 0 |
| 3 | 0 | 0 | + | 0 | 0 | 0 | − | 0 |
| 4 | 0 | 0 | 0 | + | 0 | 0 | 0 | − |
| 5 | − | 0 | 0 | 0 | + | 0 | 0 | 0 |
| 6 | 0 | − | 0 | 0 | 0 | + | 0 | 0 |
| 7 | 0 | 0 | − | 0 | 0 | 0 | + | 0 |
| 8 | 0 | 0 | 0 | − | 0 | 0 | 0 | + |

Fig.14

# Fig. 15

## Fig. 16

10a

3'a                    3a

1'                      1

8

## Fig. 17

10b

3'b                    3b

1'                      1

8

b    b    18    18    b

Fig. 18

Fig.19

Fig.20